# EUROPEAN PATENT APPLICATION

(11) **EP 4 068 907 A1**
(43) Date of publication of application: **05.10.2022**
(21) Application number: 21803820.6
(22) Date of filing: 07.05.2021
(51) Int. Cl.: H05B 6/64, A47J 36/32

(54) **COOKING APPLIANCE, METHOD FOR CONTROLLING COOKING APPLIANCE, AND COOKING SYSTEM**

(30) Priority: 12.05.2020 KR 20200056356; 23.02.2021 KR 20210024029
(71) Applicant: Samsung Electronics Co., Ltd., Gyeonggi-do, 16677 (KR)
(72) Inventor: JEONG, Jiho, Suwon-si Gyeonggi-do 16677 (KR); RYU, Jiheon, Suwon-si Gyeonggi-do 16677 (KR); HONG, Seunggee, Suwon-si Gyeonggi-do 16677 (KR)
(74) Representative: Walaski, Jan Filip
(86) International application number: PCT/KR2021/005731
(87) International publication number: WO 2021/230577

(57) **Abstract**

A cooking apparatus according to one embodiment includes a cooking chamber including a plurality of cooking regions, a plurality of heaters configured to heat at least one cooking region among the plurality of cooking regions, an inputter configured to receive a command related to cooking from a user, a display, and a controller configured to control the plurality of heaters and the display, wherein, while cooking is being performed in some cooking regions among the plurality of cooking regions, the controller may control the display to display other cooking regions in which additional cooking is performable.

## Description

### [Technical Field]

Embodiments of the present disclosure relate to a cooking apparatus, a method of controlling the cooking apparatus, and a cooking system.

### [Background Art]

Cooking apparatuses are apparatuses for heating cooking targets such as foods to cook the cooking targets and denote apparatuses provided with various functions related to cooking such as heating, defrosting, drying, and sterilizing of the cooking targets. The cooking apparatuses include, for example, ovens such as gas ovens and electric ovens, microwave heating apparatuses (hereinafter, microwaves), gas ranges, electric ranges, gas grills, and electric grills.

Generally, the oven is an apparatus configured to cook food by directly transmitting heat to the food or heating an interior of a cooking chamber through a heating source, such as a heater, which generates heat, and the microwave is an apparatus configured to cook food by using frictional heat generated between molecules by disturbing a molecular arrangement of the food using a high frequency as a heat source.

Recently, cooking apparatuses including both a heater and a magnetrons are emerging, and cooking apparatuses capable of cooking a plurality of cooking foods at the same time are emerging.

### [Disclosure]

### [Technical Problem]

Therefore, it is an aspect of the present disclosure to providing a cooking apparatus capable of independently cooking a plurality of cooking foods in a plurality of cooking regions provided in a cooking chamber at the same time and, while cooking is being performed in some cooking regions, performing additional cooking in the other cooking region, a method of controlling the cooking apparatus, and a cooking system.

In addition, it is an aspect of the present disclosure to providing a cooking apparatus capable of, while cooking is being performed in some cooking regions among a plurality of cooking regions, showing a user the other cooking region in which cooking is additionally performable, a method of controlling the cooking apparatus, and a cooking system.

### [Technical Solution]

In accordance with one aspect of the present disclosure, a cooking apparatus includes a cooking chamber including a plurality of cooking regions, a plurality of heaters configured to heat at least one cooking region among the plurality of cooking regions, an inputter configured to receive a command related to cooking from a user, a display, and a controller configured to control the plurality of heaters and the display, wherein, while cooking is being performed in some cooking regions among the plurality of cooking regions, the controller controls the display to display another cooking region in which additional cooking is performable.

In response to receiving an additional cooking command related to the other cooking region, the controller may change a first recipe which is being applied to the some cooking regions, determine a second recipe to be applied to the another cooking region, and control the plurality of heaters based on the changed first recipe and the second recipe.

The controller may change at least one of a cooking time or a cooking temperature included in the first recipe.

The controller may independently control an output of each of the plurality of heaters based on the changed first recipe and the second recipe.

The cooking apparatus according to one embodiment may further include a magnetron configured to emit high frequency waves into the cooking chamber, wherein the controller may independently control an output of the magnetron based on the changed first recipe and the second recipe.

The controller may control the display to display a first remaining time to cooking completion of the some cooking regions and a second remaining time to cooking completion of the another cooking region.

In response to the cooking in the some cooking regions and cooking in the another cooking region being required to be completed at the same time, the controller may adjust a cooking start time of the another cooking region.

When the another cooking region allowed to be added is displayed, the controller may control the display to display a recommended recipe with the another cooking region.

In response to delay of an arrangement of a cooking food in the other cooking region after the controller receives the additional cooking command, the controller may control the display to display a delay notice.

The cooking apparatus according to one embodiment may further include a communicator configured to communicate with a server and perform connection to a mobile device through the server, wherein the controller may control an operation of the cooking apparatus based on a user's input received from at least one of the inputter or the mobile device and control the communicator to transmit information related to the another cooking region in which the additional cooking is performable to the mobile device.

In accordance with another aspect of the present disclosure, a method of controlling a cooking apparatus, which includes a cooking chamber including a plurality of cooking regions, a plurality of heaters configured to heat at least one cooking region among the plurality of cooking regions, an inputter configured to receive a command related to cooking, and a display, includes performing cooking in some cooking regions among the plurality of cooking regions in the cooking chamber and controlling the display to display another cooking region in which additional cooking is performable.

The method of controlling a cooking apparatus according to one embodiment may further include, in response to receiving an additional cooking command related to the another cooking region, changing a first recipe which is being applied to the some cooking regions and determining a second recipe to be applied to the another cooking region, and controlling the plurality of heaters based on the changed first recipe and the second recipe.

The changing of the first recipe may include changing at least one of a cooking time or a cooking temperature included in the first recipe.

The controlling of the plurality of heaters may include independently adjusting an output of each of the plurality of heaters based on the changed first recipe and the second recipe.

The cooking apparatus may further include a magnetron configured to emit high frequency waves into the cooking chamber, and the method of controlling a cooking apparatus according to one embodiment may further include independently controlling an output of the magnetron based on the changed first recipe and the second recipe.

The method of controlling a cooking apparatus according to one embodiment may further include controlling the display to display a first remaining time to cooking completion in the some cooking regions and a second remaining time to cooking completion in the another cooking region.

The determining of the second recipe may include adjusting a cooking start time of the another cooking region in response to the cooking in the some cooking regions and cooking in the another cooking region being required to be completed at the same time.

The controlling of the display may include, when the another cooking region allowed to be added is displayed, displaying a recommended recipe with the another cooking region.

The method of controlling a cooking apparatus according to one embodiment may further include, in response to delay of an arrangement of a cooking food in the another cooking region after the additional cooking command is received, controlling the display to display a delay notice.

The cooking apparatus may further include a communicator configured to communicate with a server and perform connection to a mobile device through the server, and the method of controlling a cooking apparatus according to one embodiment may further include transmitting information related to the another cooking region in which the additional cooking is performable to the mobile device through the communicator.

### [Advantageous Effects]

In the disclosed cooking apparatus and the method of controlling the same, a plurality of cooking foods can be cooked in the plurality of cooking regions provided in the cooking chamber, and in addition, while cooking is being performed in some cooking regions, additional cooking can be performed in another cooking region.

In addition, in the disclosed cooking apparatus and the method of controlling the same, while cooking is being performed in some cooking regions among the plurality of cooking regions, other cooking regions in which additional cooking is performable can be shown to a user. Accordingly, the plurality of cooking regions provided in one cooking chamber can be effectively used.

In addition, in the disclosed cooking apparatus and the method of controlling the same, since the plurality of cooking regions which are spatially and temporarily separable are provided in one cooking chamber, an effect like various cooking apparatuses being integrated can be provided.

### [Description of Drawings]

FIG. 1 is a perspective view illustrating a cooking apparatus according to one embodiment;
FIG. 2 is a perspective view illustrating a cooking apparatus according to another embodiment;
FIG. 3 is a view illustrating some components in the cooking apparatus according to one embodiment;
FIG. 4 is a cross-sectional view illustrating the cooking apparatus according to one embodiment;
FIG. 5 is a view illustrating a heat source and a shelf of the cooking apparatus according to one embodiment;
FIG. 6 is a plan view illustrating an upper portion of the cooking apparatus according to one embodiment;
FIG. 7 is a view illustrating that a heater and a wire of the cooking apparatus are coupled according to one embodiment;
FIG. 8 is a view illustrating a cooking system according to one embodiment;
FIG. 9 is a control block diagram illustrating the cooking apparatus according to one embodiment;
FIG. 10 is a control block diagram illustrating a cooking apparatus according to another embodiment;
FIG. 11 is a graph showing an example of an operation of the heat source;
FIG. 12 is a view showing an example of another cooking region, in which additional cooking is performable, displayed on a display of the cooking apparatus;
FIG. 13 is a view showing an example of another cooking region, in which additional cooking is performable, displayed on a mobile device;
FIG. 14 is a view showing an example of a screen displayed on the display of the cooking apparatus when additional cooking is performed in another cooking region;
FIG. 15 is a view showing an example of a screen displayed on a display of the mobile device when additional cooking is performed in another cooking region;
FIG. 16 is a flowchart for describing a method of controlling a cooking apparatus according to one embodiment; and
FIG. 17 is a flowchart for describing the method of controlling a cooking apparatus in more detail according to one embodiment.

### [Modes of the Invention]

Embodiments described in this specification and configurations illustrated in drawings are only exemplary examples of the disclosed disclosure. The disclosure covers various modifications that can substitute for the embodiments and drawings herein at the time of filing of this application.

In addition, the same reference numerals or symbols refer to parts or components that substantially perform the same functions.

In addition, the terms used in the present specification are merely used to describe exemplary embodiments and are not intended to limit and/or restrict the embodiments. An expression used in the singular encompasses the expression of the plural unless it has a clearly different meaning in context. In the present specification, the terms such as "including," "having," and "comprising" are intended to indicate the presence of the features, numbers, steps, actions, components, parts, or combinations thereof disclosed in the specification and are not intended to preclude the possibility that one or more other features, numbers, steps, actions, components, parts, or combinations thereof may be present or added.

In addition, it should be understood that, although the terms "first," "second," and the like may be used herein to describe various elements, these elements should not be limited by these terms. These terms are only used to distinguish one element from another element. For example, a first element could be termed a second element, and, similarly, a second element could be termed a first element without departing from the scope of the present disclosure. As used herein, the term "and/or" includes any one or combinations of the associated listed items.

Terms "- portion," "- device," "- block," "- member," "- module," and the like used in the specification may be implemented using software or hardware. The terms "- portion," "- device," "- block," "- member," "- module," and the like may each denote a unit performing at least one function or operation. In addition, the terms "- portion," "- device," "- block," "- member," "- module," and the like may each denote at least one process executed by at least one software or processor stored in at least one of a hardware, a circuit, and a memory.

Throughout the specification, when a part is referred to as being "connected" to another part, it includes "directly connected" to another part and "indirectly connected" to another part, and the "indirectly connected" to another part includes "connected" to another part through a wireless communication network.

Reference symbols in operations are used for the sake of convenience in description and do not describe an order of the operations, and the operations may be performed through an order different from the described order unless the context clearly indicates a specific order.

Hereinafter, embodiments according to the present disclosure will be described in detail with reference to the accompanying drawings.

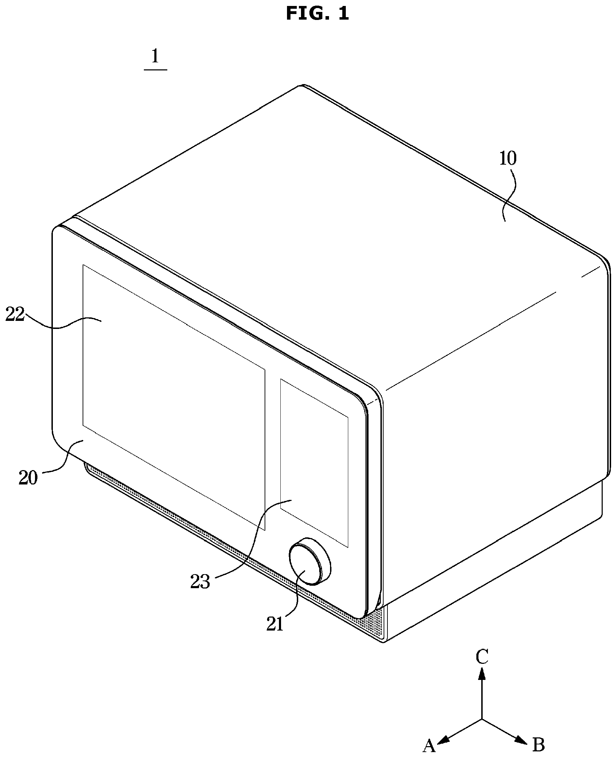

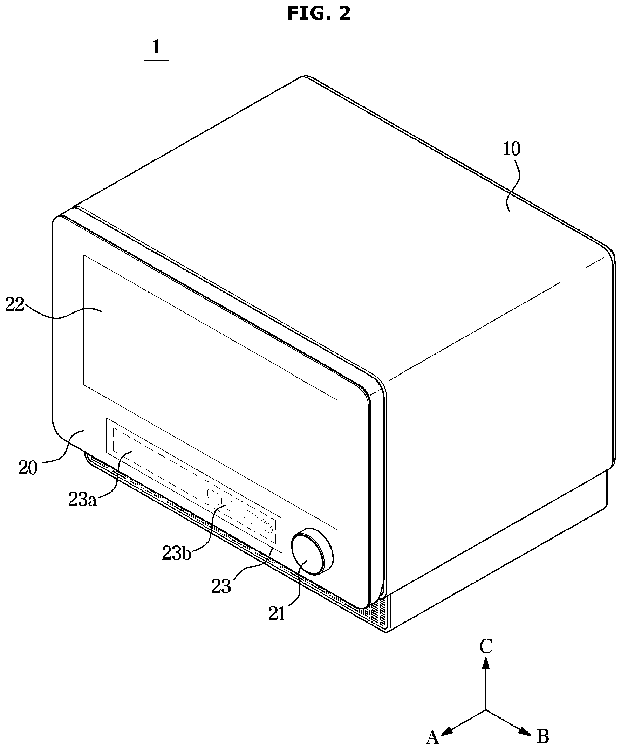

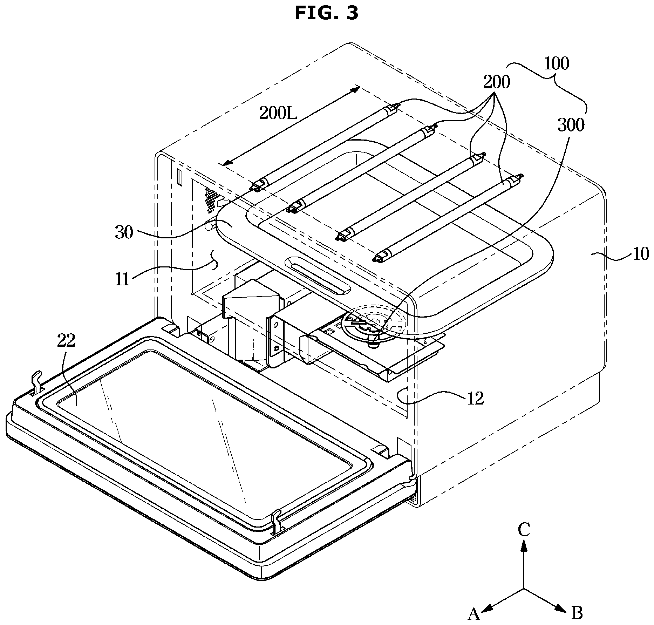

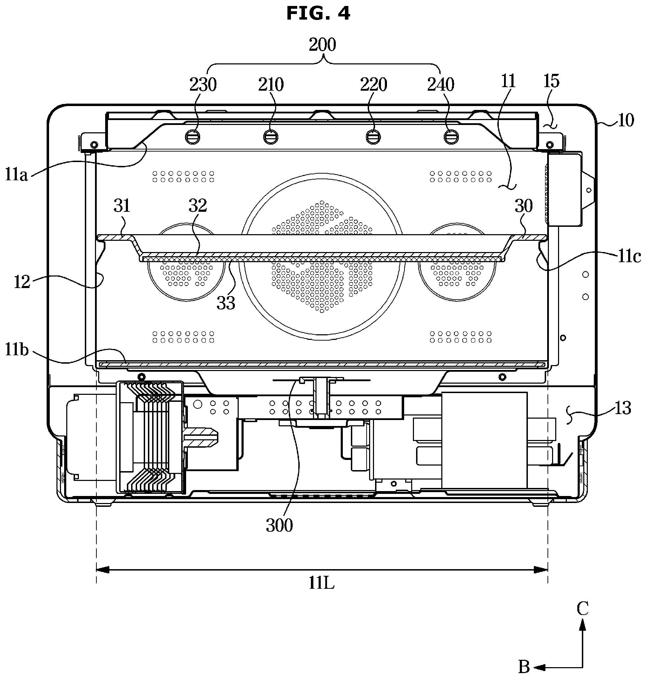

FIG. 1 is a perspective view illustrating a cooking apparatus according to one embodiment. FIG. 2 is a perspective view illustrating a cooking apparatus according to another embodiment. FIG. 3 is a view illustrating some components in the cooking apparatus according to one embodiment. FIG. 4 is a cross-sectional view illustrating the cooking apparatus according to one embodiment.

Referring to FIGS. 1 and 2, a cooking apparatus 1 may include an outer housing 10 and a door 20 provided to open or close openings of the outer housing 10 and an inner housing 12.

An inputter 21 which receives a user's input related to an operation of the cooking apparatus 1 may be provided on the door 20. The inputter 21 may be provided in the cooking apparatus 1 at another position instead of being provided on the door 20. The inputter 21 may output an electrical signal (voltage or current) corresponding to the user's input to a controller 600. In FIGS. 1 and 2, the inputter 21 is illustrated in a dial form but is not limited thereto. For example, the inputter 21 may be provided in a button form.

In addition, a transparent member 22 may be provided in the door 20. When the door 20 is closed, the user may observe an inside of the cooking chamber 11 through the transparent member 22. The transparent member 22 may be replaced with a translucent member, an opaque member, or a transparent display.

In addition, a display 23 which displays information related to an operation of the cooking apparatus 1 may be provided on the door 20. For example, as illustrated in FIG. 1, the display 23 may be disposed above the inputter 21. In addition, as illustrated in FIG. 2, the display 23 may be disposed beside the inputter 21 and under the transparent member 22. Alternatively, the display 23 may also be provided in the cooking apparatus 1 at another position instead of being provided in the door 20.

The display 23 may include one of various types of display panels. For example, the display 23 may include a liquid crystal display (LCD) panel, a light emitting diode (LED) panel, an organic LED panel, or a micro-LED panel. The display 23 may be used as an input device including a touch screen.

The display 23 may display information which is input by the user or is provided to the user using various screens. The display 23 may display information related to an operation of the cooking apparatus 1 through at least one of an image and text. In addition, the display 23 may display a graphic user interface (GUI) allowing the cooking apparatus 1 to be controllable. That is, the display 23 may display a user interface (Ul) element such as an icon.

In addition, as illustrated in FIG. 2, the display 23 may also include a screen region 23a in which information related to an operation of the cooking apparatus 1 is displayed and a touch button region 23b in which a user's input is received. The touch button region 23b may include at least one among a start button, a stop button, a smart control button, and a return button. In addition, the touch button region 23b may include various buttons.

Referring to FIGS. 3 and 4, the cooking apparatus 1 may include a cooking chamber 11 in which a cooking food is positioned. In addition, the cooking chamber 11 may be formed by the inner housing 12. A predetermined separation space 15 may be formed between the inner housing 12 and the outer housing 10.

The outer housing 10 and the inner housing 12 may be provided to be open in a first direction A that is a forward direction of the cooking apparatus. The user may place a cooking food in the cooking chamber 11 through the opening of the inner housing 12 formed in the first direction A. The cooking chamber 11 may be provided in a rectangular parallelepiped shape having long sides 11L in a second direction B perpendicular to the first direction A in a left-right direction.

The cooking apparatus 1 may include an electric room 13 formed in the outer housing 10 and disposed under the cooking chamber 11. Various electrical components which operate the cooking apparatus 1 may be disposed in the electric room 13.

The cooking apparatus 1 may include a shelf 30 which is installed in the cooking chamber 11 and in which a cooking food is disposed. The shelf 30 may be detachably disposed in the cooking chamber 11. The cooking chamber 11 may include supports 11c formed at both side surfaces of the cooking chamber 11 so that the shelf 30 is installed between an upper surface 11a and a lower surface 11b of the cooking chamber 11.

The plurality of supports 11c may be provided in a third direction C so that the shelf 30 is installed at one of various levels. The third direction C is a direction vertically perpendicular to the first direction A or the second direction B.

The shelf 30 may include a main body 31 on which a cooking surface 32 is provided, wherein a cooking food may be positioned on the cooking surface 32. The cooking surface 32 may be provided to face the upper surface 11a of the cooking chamber 11 when the shelf 30 is installed on the supports 11c. The cooking surface 32 may have a rectangular shape having long sides in the second direction B and short sides in the first direction A.

The cooking apparatus 1 may include a heat source 100 which provides heat into the cooking chamber 11 so that a cooking food is cooked by the heat. The heat source 100 may heat the cooking food disposed in the cooking chamber. The heat source 100 may provide the heat to the cooking food positioned on the shelf 30. In addition, a cooking food may also be positioned on the lower surface 11b of the cooking chamber 11. The heat source 100 may also provide heat to the cooking food positioned on the lower surface 11b.

The heat source 100 may include heaters 200 disposed on the upper surface 11a of the cooking chamber 11. The heater 200 may be provided as a plurality of heaters 210, 220, 230, and 240. Heat generated by the plurality of heaters 210, 220, 230, and 240 is transmitted to a cooking food. The heaters 200 may be defined as a first heat source. The heater 200 may include a sheath heater, a surface heater, a halogen lamp heater, or the like.

In addition, the heat source 100 may include a magnetron 300 disposed under the lower surface 11b of the cooking chamber 11. The magnetron 300 may be defined as a second heat source. The magnetron 300 may generate a high frequency. The high frequency generated by the magnetron 300 repeatedly changes a molecular arrangement of moisture contained in a cooking food so that the cooking food may be heated by frictional heat between the moisture molecules. The magnetron 300 may be disposed in the electric room 13. The magnetron 300 may emit a high frequency from the electric room 13 toward the lower surface 11b of the cooking chamber 11, and the high frequency may pass through the lower surface 11b to be emitted to the shelf 30.

The conventional electronic range type cooking apparatus heats a cooking food using one magnetron. However, the conventional electronic range type cooking apparatus has problems in that a high frequency is not uniformly transmitted to the entire cooking food according to a moisture distribution or a moisture content of the cooking food and the cooking food may not be effectively cooked. In order to solve these problems, the heaters 200 capable of transmitting heat to an entire cooking food may be installed in the cooking apparatus. Effective cooking is performable by providing additional heat to the cooking food.

The cooking apparatus 1 according to one embodiment may include the heaters 200 and the magnetron 300 to effectively cook a cooking food. As described above, the heaters 200 may be disposed on the upper surface 11a of the cooking chamber 11 to transmit heat to an upper portion of the cooking food. However, the heaters 200 may not effectively transmit the heat to a lower portion of the cooking food disposed on the shelf 30.

In the cooking apparatus 1 according to one embodiment, a heating part 33 may be provided in the shelf 30 so that heat is effectively transmitted to a lower portion of a cooking food disposed on the shelf 30. The heating part 33 may be disposed at a side opposite to the cooking surface 32 in the main body 31 of the shelf 30. The heating part 33 may be provided to face the lower surface 11b of the cooking chamber 11 when the shelf 30 is installed on the supports 11c of the cooking chamber 11.

The heating part 33 may absorb a high frequency generated by the magnetron 300 to generate heat. The heat generated by the heating part 33 may be transmitted to the cooking surface 32 of the shelf 30. That is, the heat generated by the heating part 33 may be transferred to the cooking surface 32 to be supplied to the lower portion of the cooking food positioned on the cooking surface 32 of the shelf 30. The heating part 33 may be formed of a ferrite material to absorb a high frequency. However, the present disclosure is not limited thereto, and a material capable of generating heat due to the high frequency, ceramics, and the like may be mixed to form the heating part 33.

Accordingly, even when the user does not turn a cooking food over during a cooking process, since heat may be supplied to the cooking food in an up-down direction, the cooking can be effectively performed.

The cooking apparatus 1 according to one embodiment may include the cooking chamber 11 having the rectangular parallelepiped shape formed to be long in the second direction B and relatively short in the first direction A. In other words, the cooking chamber 11 may have a rectangular parallelepiped shape having the long sides 11L in the second direction B. A plurality of cooking regions may be provided in the cooking chamber 11. Cooking regions 34 and 35 provided on the shelf 30 may be defined as a first cooking region 34 and a second cooking region 35, and the lower surface 11b of the cooking chamber 11 may be defined as a third cooking region. Although the cooking regions are described as being provided as two cooking regions on the shelf 30, three or more cooking regions may also be provided.

Meanwhile, there is a case in which a plurality of cooking foods of which cooking temperatures are different are input to and simultaneously cooked in the cooking chamber 11. That is, different cooking foods may be each disposed in one of the cooking regions 34 and 35 of the shelf 30 and the lower surface 11b of the cooking chamber 11. In this case, in the cooking apparatus 1, temperatures of heat generated by the plurality of heaters 200 (210, 220, 230, and 240) may be set to be different from each other. That is, in the cooking apparatus 1, outputs of the plurality of heaters 210, 220, 230, and 240 may be independently adjusted. In addition, in the cooking apparatus 1, an output of the magnetron 300 may be independently adjusted. Accordingly, different heat energy may be transmitted to each of the plurality of cooking foods disposed on the cooking regions 34 and 35 of the shelf 30 and the lower surface 11b of the cooking chamber 11.

In a case in which the plurality of heaters 210, 220, 230, and 240 according to one embodiment are disposed on the upper surface 11a of the cooking chamber 11, a plurality of cooking foods may be disposed at positions corresponding to positions of the plurality of heaters 210, 220, 230, and 240. For example, the cooking surface 32 of the shelf 30 may be divided into the first cooking region 34 and the second cooking region 35, and the first cooking region 34 and the second cooking region 35 of the shelf 30 may be heated at different temperatures. Each of the plurality of cooking foods may be positioned at one of the cooking regions 34 and 35 of the shelf 30. Accordingly, different heat energy may be supplied to each of the plurality of cooking foods.

The plurality of heaters 210, 220, 230, and 240 may be formed to face the cooking regions 34 and 35 of the shelf 30 in the third direction C. Different heat generated by each of the plurality of heaters 200 may be directly transmitted to one of the first cooking region 34 and the second cooking region 35 of the shelf 30.

Accordingly, even in a case in which a plurality of cooking foods of which cooking temperatures are different are input to the cooking chamber at the same time, each of the cooking foods may be cooked at one of different temperatures. In other words, in a case in which each of the cooking foods are disposed at one of the first cooking region 34, the second cooking region 35, and the third cooking region 11b, each of the cooking foods may be cooked at one of different temperatures.

However, cooking foods disposed on the first cooking region 34, the second cooking region 35, and the third cooking region 11b may also be cooked at the same temperature. For example, in a case in which one cooking food disposed on both the first cooking region 34 and the second cooking region 35 is cooked, the plurality of heaters 200 may be controlled to simultaneously generate the same heat energy.

The cooking apparatus 1 according to one embodiment includes the plurality of heaters 200 (210, 220, 230, and 240) each having a long axis 200L extending in the first direction A. The heaters 200 (210, 220, 230, and 240) may be disposed to be spaced apart from each other in the second direction B corresponding to the long side 11L of the cooking chamber 11. The plurality of cooking regions 34 and 35, each of which receives one of different temperatures, may be divided in the second direction B on the cooking surface 32 of the shelf 30.

As described above, since the plurality of heaters 210, 220, 230, and 240 are disposed to be spaced apart from each other in the second direction B and the cooking regions 34 and 35 of the shelf 30 are divided in the second direction B, widths of the cooking regions may be increased, and a temperature difference between the cooking regions may be increased. In addition, when a plurality of cooking foods are disposed, since the plurality of cooking foods do not need to be deeply disposed at a rear surface of the cooking chamber 11, the cooking foods disposed on the shelf 30 are easily observed.

However, in a conventional cooking apparatus, heaters having lengths in a second direction B are disposed to be spaced apart from each other in a first direction A, a plurality of cooking regions, each of which may receive one of different temperatures, are divided in the first direction A. When the plurality of cooking regions are divided in the first direction A which is a direction of a short side 32S of a cooking surface 32, widths of the cooking regions are unavoidably small. Since the widths of the cooking regions formed in the first direction A are small, an actual temperature difference between the divided cooking regions may be small.

In addition, in the conventional cooking apparatus, there is a problem in that a cooking food is disposed outside of the cooking region having the small width, and there is an inconvenience in that a cooking food deeply disposed at a rear surface in a cooking chamber is not easily observed among a plurality of cooking foods.

Hereinafter, the plurality of heaters 200 (210, 220, 230, and 240) and the plurality of cooking regions 34 and 35 divided on the shelf 30 to correspond thereto will be described in detail according to one embodiment.

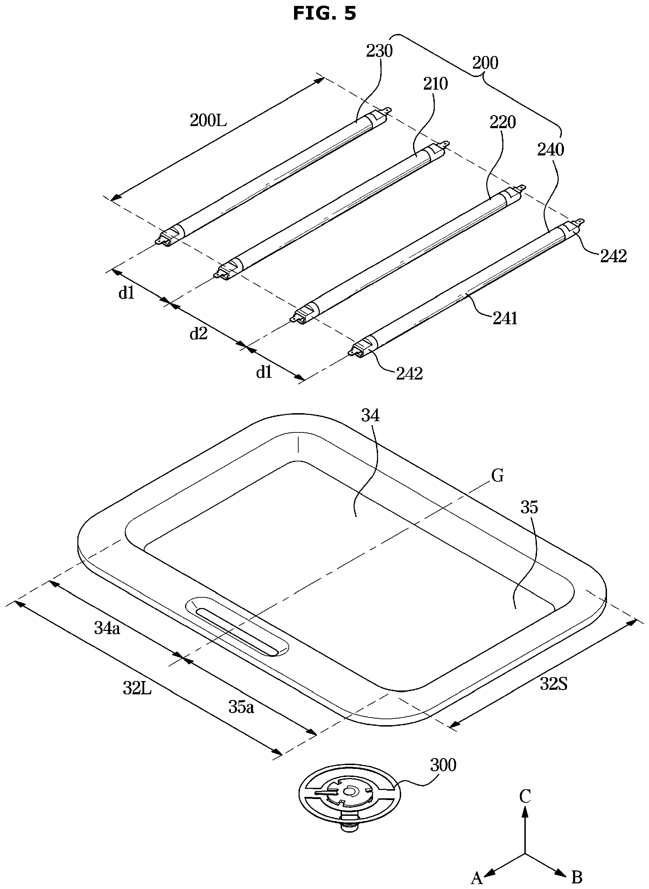

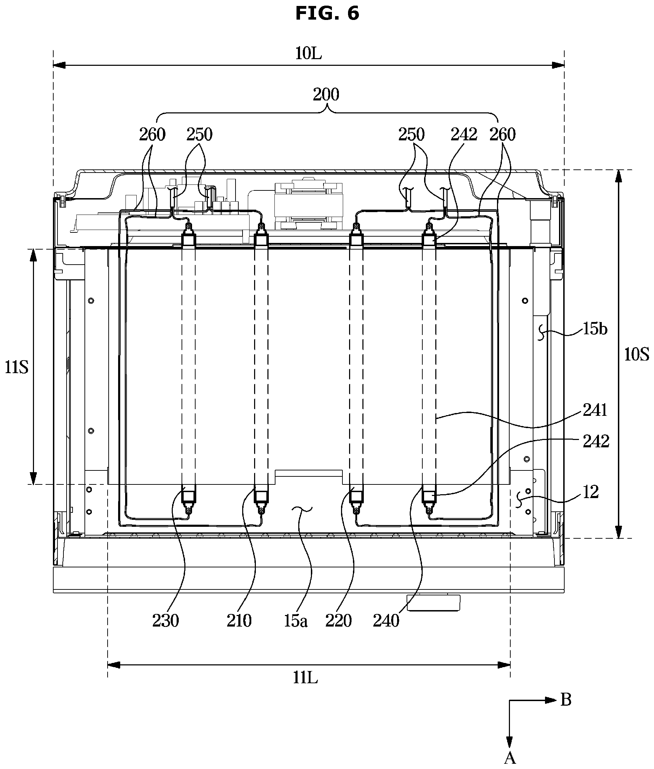

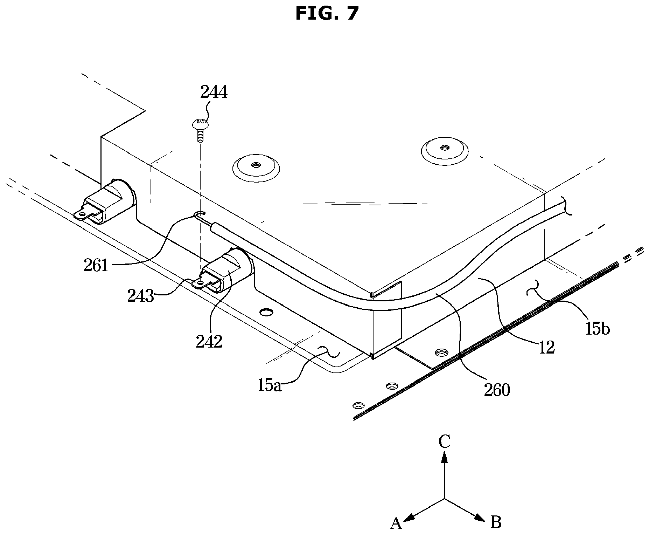

FIG. 5 is a view illustrating the heat source and the shelf of the cooking apparatus according to one embodiment. FIG. 6 is a plan view illustrating the upper portion of the cooking apparatus according to one embodiment. FIG. 7 is a view illustrating that a heater and a wire of the cooking apparatus are coupled according to one embodiment.

Referring to FIGS. 5 and 6, each of the plurality of heaters 200 (210, 220, 230, and 240) may have the long axis 200L extending in the first direction A, and the plurality of heaters 200 (210, 220, 230, and 240) may be disposed to be spaced apart from each other in the second direction B corresponding to the long side 11L of the cooking chamber 11. Separation distances between the plurality of heaters 200 (210, 220, 230, and 240) may be a first separation distance d1 and/or a second separation distance d2.

A first heater 210 and a third heater 230 may be disposed with the first separation distance d1 above the first cooking region 34, and a second heater 220 and a fourth heater 240 may be disposed with the first separation distance d1 above the second cooking region 35. The first heater 210 and the second heater 220 may be disposed with the second separation distance d2. The second separation distance d2 may be greater than the first separation distance d1. This is for providing a temperature difference between the first cooking region 34 and the second cooking region 35.

The heaters 200 are described as including the first heater 210, the second heater 220, the third heater 230, and the fourth heater 240 but are not limited thereto. The heaters 200 may also include the first heater 210 and the second heater 220 or include four or more heaters.

Since all the plurality of heaters 200 (210, 220, 230, and 240) have the same shape, the fourth heater 240 will be mainly described below. The fourth heater 240 may include a body portion 241 which extends in a direction of the long axis 200L and is heated by power and two end portions 242 disposed at both ends of the body portion 241.

The two end portions 242 may be provided so that external power is supplied to the fourth heater 240. The body portion 241 may generate heat due to the power supplied through the two end portions 242, and the heat may be transmitted to the shelf 30. The two end portions 242 may be disposed in the first direction A.

The first heater 210 may be disposed at one side of the cooking apparatus 1 in the second direction B, and the second heater 220 may be disposed at a side opposite to the first heater 210 in the second direction B. Specifically, the first heater 210 may be disposed at one side, and the second heater 220 may be disposed at a side opposite to the one side with respect to a center line G of the cooking surface 32. The third heater 230 may be disposed adjacent to the first heater 210, and the fourth heater 240 may be disposed adjacent to the second heater 220.

The first heater 210, the second heater 220, the third heater 230, and the fourth heater 240 may be independently controlled. The meaning of independently controlling the plurality of heaters 200 is that operations of the heaters 200 are not interdependent and are independent. In other words, the plurality of heaters 200 may be selectively controlled. That is, among the plurality of heaters 200, some heaters 200 may be controlled to operate, and other heaters 200 may be controlled to not operate. In addition, the plurality of heaters 200 may be controlled to generate the same heat energy at the same time.

For example, the first heater 210 and the third heater 230 may generate heat at the same temperature. In addition, the second heater 220 and the fourth heater 240 may generate heat at the same temperature. The first heater 210 and the second heater 220 may generate heat at different temperatures. Similarly, the third heater 230 and the fourth heater 240 may generate heat at different temperatures. That is, a heating temperature at a left side and a heating temperature at a right side may be different from each other with respect to the center line G. Specifically, in the cooking apparatus 1, a heating temperature of the first heater 210 may be set to be higher than a heating temperature of the second heater 220. In this case, the first heater 210 and the second heater 220 may be independently controlled based on preset temperatures.

Meanwhile, although heating temperatures of the plurality of heaters 200 (210, 220, 230, and 240) may be set to be the same, driving methods may be controlled differently. For example, during a total cooking time in the cooking apparatus 1, the first heater 210 and the third heater 230 are continuously driven and the second heater 220 and the fourth heater 240 may be repeatedly turn on and off to be driven. Accordingly, heat energy provided by the first and third heaters 210 and 230 may be greater than heat energy provided by the second and fourth heaters 220 and 240. In addition, in the same cooking time, the plurality of heaters 200 may be operated based on different heating temperatures and different heating ON/OFF times. For example, a heating temperature of the first heater 210 may be set to 90 °C, and an on-off cycle of the first heater 210 may be set to 3 minutes. A heating temperature of the second heater 220 may be set to 100 °C, and an on-off cycle of the second heater 220 may be set to 4 minutes. A heating temperature of the third heater 230 may be set to 110 °C, and an on-off cycle of the third heater 230 may be set to 5 minutes. A heating temperature of the fourth heater 240 may be set to 120 °C, and an on-off cycle of the fourth heater 240 may be set to 6 minutes.

One or more heaters may be provided to correspond to one cooking region. For example, one heater may be set to correspond to the first cooking region, and three heaters may be set to correspond to the second cooking region.

As illustrated in FIG. 5, the cooking surface 32 of the shelf 30 may be divided into the first cooking region 34 and the second cooking region 35. The first cooking region 34 may be formed at a left side and the second cooking region 35 may be formed at a right side with respect to the center line G. Although two cooking regions of the shelf 30 are illustrated, three or more cooking regions may also be formed. For example, in a case in which three cooking regions are formed, the first cooking region may be provided to correspond to the positions of the first heater 210 and the third heater 230, the second cooking region may be provided to correspond to a position of the second heater 220, and the third cooking region may be provided to correspond to a position of the fourth heater 240.

The plurality of heaters 200 may provide heat to at least one of the first cooking region 34 and the second cooking region 35 of the shelf 30. The first heater 210 and the third heater 230 may be disposed at the positions corresponding to the first cooking region 34 in the third direction C. The second heater 220 and the fourth heater 240 may be disposed at the positions corresponding to the second cooking region 35 in the third direction C.

As described above, in a case in which heat generated by the first and third heaters 210 and 230 and heat generated by the second and fourth heaters 220 and 240 are different, heat energy transmitted to the first cooking region 34 and heat energy transmitted to the second cooking region 35 may be different. That is, the heat generated by the first heater 210 and the third heater 230 may be transmitted from the upper surface 11a to the first cooking region 34. The heat generated by the second heater 220 and the fourth heater 240 may be transmitted from the upper surface 11a to the second cooking region 35.

In addition, heat generated from the heating part 33 may be transmitted to the first cooking region 34 and the second cooking region 35. The heating part 33 may be heated by a high frequency generated by the magnetron 300 disposed under the lower surface 11b of the cooking chamber 11. The heat generated by the heating part 33 may be transferred to the cooking surface 32.

The heat generated by the first and third heaters 210 and 230 and the heat generated by the second and fourth heaters 220 and 240 may be different, and heat transmitted to the first cooking region 34 and heat transmitted to the second cooking region 35 may be different, and thus each of cooking foods of which cooking temperatures are different may be disposed in one of the first cooking region 34 and the second cooking region 35 and cooked at the same time.

In addition, since cooking foods may be disposed at left and right sides on the shelf 30 in the first direction A, the user may easily observe cooking states of the cooking foods through the transparent member 22.

As illustrated in FIG. 5, a short side 32S of the cooking surface 32 may perpendicularly intersect a long side 32L and extend in the first direction A. The first cooking region 34 and the second cooking region 35 may be divided in the second direction B to correspond to the plurality of heaters 200 (210, 220, 230, and 240) disposed to be spaced apart from each other in the second direction B. Since the long side 32L of the cooking surface 32 extends in the second direction B, the first cooking region 34 and the second cooking region 35 may have sufficient lengths in one direction.

That is, in the second direction B, a length of the first cooking region 34 may be defined as a first length 34a and a length of the second cooking region 35 may be defined as a second length 35a. The first length 34a and the second length 35a may be provided so that each of the first cooking region 34 and the second cooking region 35 has an area sufficient for accommodating one of cooking foods. Accordingly, the area of the first cooking region 34 and the area of the second cooking region 35 may be respectively provided as 34a*32S and 35a*32S.

Meanwhile, the first length 34a or the second length 35a may be provided to be the same as a length of the short side 32S of the cooking surface 32. In this case, each of the first cooking region 34 and the second cooking region 35 may be provided as a square shape, and a cooking food may be easily positioned in the first cooking region 34 or the second cooking region 35.

In addition, the first length 34a or the second length 35a may be provided as a length different from the short side 32S of the cooking surface 32. In this case, each of the first cooking region 34 and the second cooking region 35 may be provided as a rectangular shape. Even in a case in which each of the first cooking region 34 and the second cooking region 35 is provided as a rectangular shape, a ratio between a horizontal length and a vertical length of each of the first cooking region 34 and the second cooking region 35 is provided within a predetermined ratio range. Accordingly, the first cooking region 34 and the second cooking region 35 may provide spaces greater than spaces of the conventional cooking apparatus in order for accommodating cooking foods.

Referring to FIG. 6, the outer housing 10 may have a long side 10L in the second direction B and a short side 10S in the first direction A to correspond to an area of the cooking chamber 11. The plurality of heaters 200 (210, 220, 230, and 240) may each have the long axis 200L extending in the first direction A and may be disposed to be spaced apart from each other in the second direction B.

Accordingly, the body portion 241 of the fourth heater 240 may be disposed inside the inner housing 12 to be positioned in the cooking chamber 11. The two end portions 242 of the fourth heater 240 may pass through the inner housing 12 to be disposed in the separation space 15 formed outside the cooking chamber 11.

Each of the plurality of heaters 200 may include a power supply unit 250 through which power is supplied to the heater 200 and wires 260 coupled to two end portions 242 to supply power to each of the plurality of heaters 200. The wires 260 may be provided to be coupled to the two end portions 242 in the separation space 15 formed between the inner housing 12 and the outer housing 10.

When an example of the fourth heater 240 is described, the two end portions 242 of the fourth heater 240 are disposed in the first direction A. Accordingly, the wires 260 and the two end portions 242 may be coupled in a first separation space 15a formed between the long side 10L of the outer housing 10 and the long side 11L of the cooking chamber 11.

However, in a case in which the wires 260 are inserted into the two end portions 242 in the first direction A or the second direction B, the wires 260 may be excessively bent and stable coupling therebetween may be difficult. In order to solve this, as illustrated in FIG. 7, the two end portions 242 of the fourth heater 240 may be provided to be coupled to the wires 260 in the third direction C.

Accordingly, even when the first separation space 15a is narrow, the wires 260 and the fourth heater 240 may be stably coupled. That is, since the wires 260 and the two end portions 242 are coupled in the third direction C, a stress due to bending of the wires 260 in the first direction A or the second direction B may be minimized, and the wires 260 and the two end portions 242 may be stably coupled.

However, in the case of the conventional cooking apparatus, the conventional cooking apparatus is a different from the present disclosure in that the heaters are disposed in the second direction B. That is, the heaters of the conventional cooking apparatus are coupled to wires in a second separation space 15b formed between a short side 10S of an outer housing 10 and a short side 11S of a cooking chamber 11.

The wires 260 connected to the heaters 200 according to one embodiment may include contact portions 261 in contact with the two end portions 242 of each of the heaters 200 to supply power to each of the heaters 200. The two end portions 242 may include flanges 243 provided to be in contact with the contact portions 261 in the third direction C. The two end portions 242 may include coupling members 244 provided to couple the contact portions 261 and the flanges 243 in a state in which the flanges 243 are in contact with the contact portions 261. The coupling members 244 may be provided as screws and the like. In a state in which the contact portions 261 are in contact with the flanges 243 in the third direction C, the coupling members 244 may be coupled to the flanges 243 in the third direction C to fix a contact state of the flanges 243 and the contact portions 261.

Accordingly, since a direction in which the heaters 200 and the wires 260 are assembled corresponds to the third direction C, even when the first separation space 15a is narrow, the heaters 200 and the wires 260 may be easily assembled.

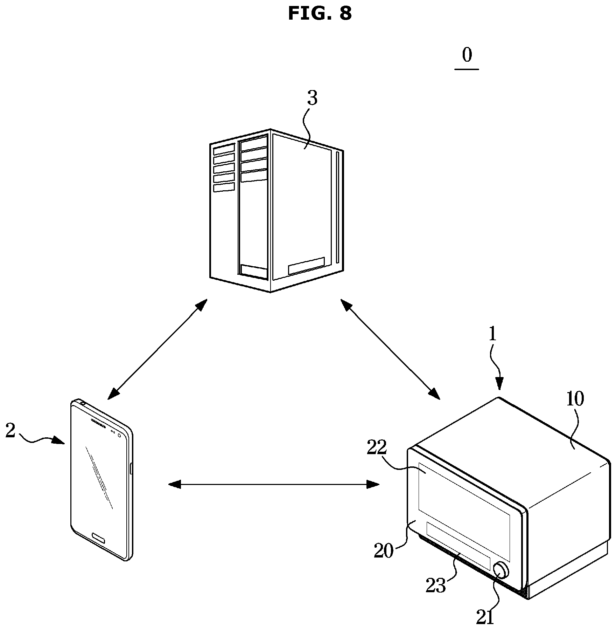

FIG. 8 is a view illustrating a cooking system according to one embodiment.

Referring to FIG. 8, a cooking system 0 may include the cooking apparatus 1, a mobile device 2, and a server 3. The cooking apparatus 1 is the same as the above-described cooking apparatus 1. The cooking apparatus 1 may be connected to at least one of the mobile device 2 and the server 3 through a network. In addition, the mobile device 2 and the server 3 may also be connected through the network. The server 3 corresponds to a computing device. The cooking apparatus 1 may be connected to the mobile device 2 through the server 3 to transmit and receive data. Alternatively, the cooking apparatus 1 may be directly connected to the mobile device 2 to transmit and receive data. The mobile device 2 may be a mobile phone, a portable multimedia player (PMP), a digital broadcasting player, a personal digital assistant (PDA), a music file player (for example, a Moving Picture Experts Group (MPEG)Audio Layer-3 (MP3) player), a portable game terminal, a tablet personal computer (PC), or a smart phone. The mobile device 2 includes a display which outputs a screen. Hereinafter, the mobile device 2 will be illustrated as a smart phone.

As an example, the mobile device 2 may transmit a control signal to the cooking apparatus 1 through the server 3. The mobile device 2 may receive a user's input and transmit a signal corresponding to the user's input to the server 3. The server 3 may transmit the signal received from the mobile device 2 to the cooking apparatus 1. A communicator 400 of the cooking apparatus 1 may receive the signal transmitted from the server 3 and transmit an electrical signal corresponding to the received signal to the controller 600. Accordingly, the controller 600 of the cooking apparatus 1 may control an operation of the cooking apparatus 1 in response to the user's input.

As another example, the mobile device 2 may directly transmit a control signal to the cooking apparatus 1. The communicator 400 of the cooking apparatus 1 may receive the control signal of the mobile device 2. The mobile device 2 may receive a user's input and transmit a control signal corresponding to the user's input to the cooking apparatus 1. The communicator 400 of the cooking apparatus 1 may transmit the transmitted control signal to the controller 600. Accordingly, the controller 600 of the cooking apparatus 1 may control an operation of the cooking apparatus 1 in response to the user's input.

The mobile device 2 may include an application for controlling a cooking apparatus 1. In addition, the mobile device 2 may display a GUI allowing the cooking apparatus 1 to be controllable. For example, the mobile device 2 may display the GUI related to the plurality of cooking regions in the cooking apparatus 1. The user may operate the cooking apparatus 1 using the mobile device 2.

The mobile device 2 may communicate with the server 3 to transmit and receive data. For example, the mobile device 2 may receive recipe data from the server 3. The mobile device 2 may transmit the recipe data to the cooking apparatus 1 through the server 3 or directly transmit the recipe data to the cooking apparatus 1. In addition, the cooking apparatus 1 may also directly receive recipe data from the server 3. The cooking apparatus 1 may perform cooking based on the recipe data received from the mobile device 2 or the server 3.

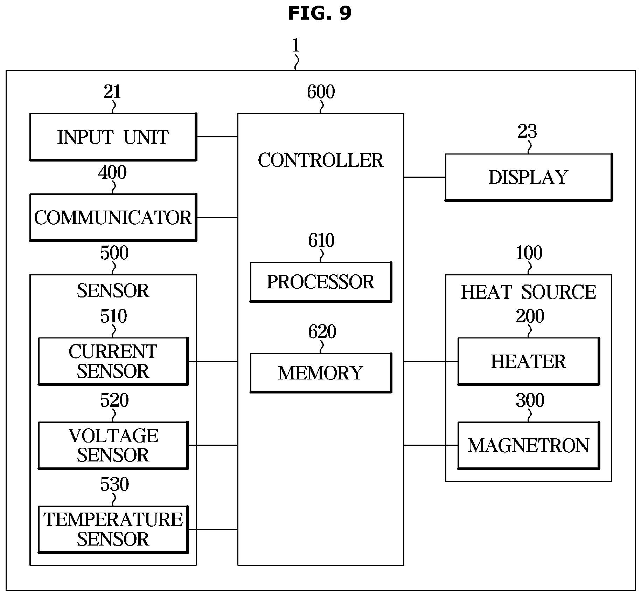

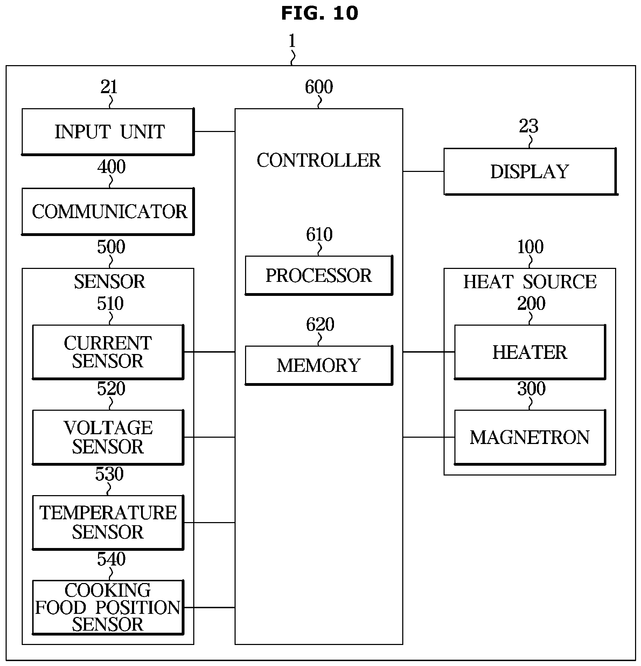

FIG. 9 is a control block diagram illustrating the cooking apparatus according to one embodiment. FIG. 10 is a control block diagram illustrating a cooking apparatus according to another embodiment.

Referring to FIG. 9, the cooking apparatus 1 according to one embodiment may include the inputter 21, the display 23, the heat source 100, the communicator 400, sensors 500, and the controller 600. The controller 600 is electrically connected to the inputter 21, the heat source 100, the communicator 400, and the sensors 500. The controller 600 may control the components of the cooking apparatus 1.

The inputter 21 may receive a user's input. The user's input may include various commands. The inputter 21 may receive a command related to an operation of the cooking apparatus 1. For example, the inputter 21 may receive at least one among a command for selecting a cooking mode, a command for selecting a cooking region, a command for selecting a recipe, a command for adjusting an output of the heat source, a command for adjusting a cooking time, a command for adjusting a cooking temperature, a cooking start command, and a cooking stop command. In addition, the inputter 21 may receive a command corresponding to each of the plurality of cooking regions.

In addition, a user's input may also be received from the mobile device 2. The communicator 400 of the cooking apparatus 1 may receive at least one among a command for selecting a cooking region, a command for selecting a recipe, a command for adjusting an output of the heat source, a command for adjusting a cooking time, a command for adjusting a cooking temperature, a cooking start command, and a cooking stop command, which are input through the mobile device 2, from the server 3 or directly receive the at least one thereamong from the mobile device 2.

As examples of the cooking mode, a single-cook mode, a multi-cook mode, and an add-cook mode may be provided. The single-cook mode may be a mode in which one cooking food is cooked, and the multi-cook mode may be a mode in which a plurality of cooking foods are cooked at the same time. The add-cook mode may be defined as an intermediate mode for changing a recipe in a case in which, while cooking is being performed in some cooking regions among the plurality of cooking regions in the cooking chamber 11, additional cooking is required in the remaining cooking regions. In other words, in a case in which, while cooking is being performed in the single-cook mode or the multi-cook mode, the cooking region is additionally required to additionally cook a cooking food, the cooking mode may be switched to the add-cook mode so that a change in recipe may be performed. The single-cook mode, the multi-cook mode, and the add-cook mode do not need to be recognized by the user. The cooking apparatus 1 may automatically determine the cooking mode based on a user's input which selects the cooking region.

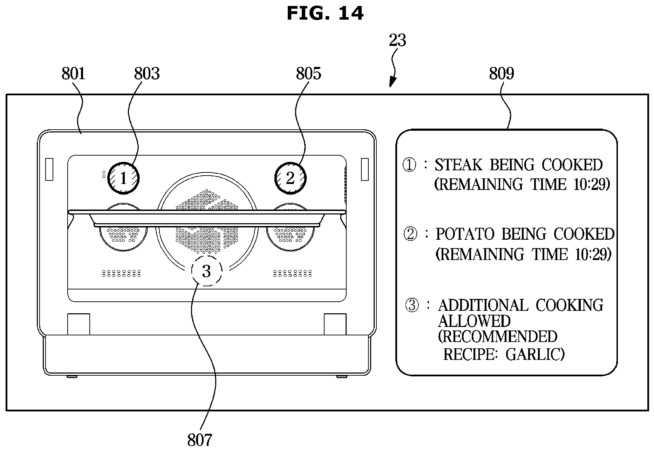

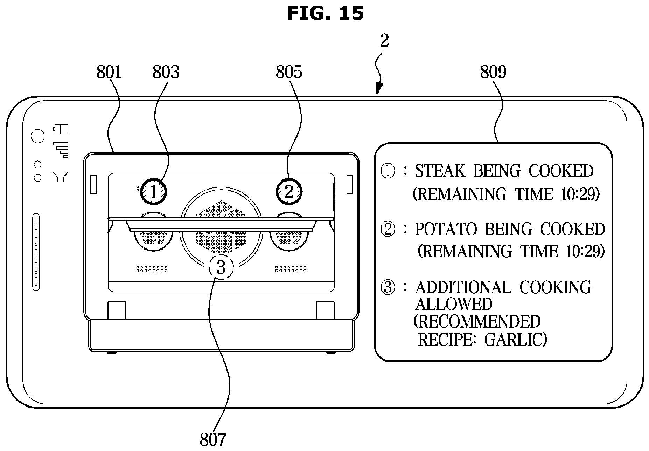

For example, while cooking related to the first cooking region 34 of the shelf 30 is being performed, another cooking food may be required to be added in the second cooking region 35 of the shelf 30. Specifically, while cooking is being performed in the first cooking region 34, the cooking apparatus 1 may receive an additional cooking command related to the second cooking region 35 from the mobile device 2 or the inputter 21. In this case, the cooking apparatus 1 may change a recipe applied to the first cooking region 34 and determine a recipe to be applied to the second cooking region 35. Additional cooking will be described in detail with respect to FIGS. 14 and 15.

A processor 610 of the controller 600 may process a command related to cooking received through at least one of the inputter 21 and the mobile device 2 and control an operation, which corresponds to the received command, of the cooking apparatus 1. The cooking apparatus 1 may automatically perform the cooking based on a received recipe from the mobile device 2, the server 3, or a memory 620.

The heat source 100 may provide heat to at least one cooking region of the plurality of cooking regions in the cooking chamber 11. The heat source 100 may include the heaters 200 and the magnetron 300. The heaters 200 may be provided as the plurality of heaters 210, 220, 230, and 240. The heaters 200 may be defined as the first heat source, and the magnetron 300 may be defined as the second heat source. The heat source 100 is the same as the above-described heat source 100.

The communicator 400 may connect the cooking apparatus 1 and external device through a network or communication channel. For example, the communicator 400 may communicate with at least one of the mobile device 2 and the server 3 to transmit and receive data. The mobile device 2 may be illustrated as a smart phone. The communicator 400 may include various communication modules. The communicator 400 may include wireless communication modules and/or wired communication modules. As wireless communication technology, a wireless local area network, a home radio frequency (RF), infrared communication, ultra-wide band (UWB) communication, Wi-Fi, Bluetooth, ZigBee, and the like may be applied.

Referring to FIG. 9, the cooking apparatus 1 may include various sensors 500. For example, the cooking apparatus 1 may include one or more among a current sensor 510, a voltage sensor 520, and a temperature sensor 530. The current sensor 510 may measure a current applied to the heat source 100. The current sensor 510 may measure a current applied to the power supply unit 250 and transmit a measured current value to the processor 610. The voltage sensor 520 may measure a voltage applied to the heat source 100. The voltage sensor 520 may check and/or measure a voltage applied to the power supply unit 250 and transmit a measured voltage value to the processor 610. In FIG. 9, the current sensor 510 and the voltage sensor 520 are individually illustrated but may also be implemented as one device. The temperature sensor 530 may check and/or measure a temperature in the cooking chamber 11 and transmit a measured temperature value to the processor 610. The temperature sensor 530 may further include a probe which comes into contact with a cooking food to measure a temperature of the cooking food.

Referring to FIG. 10, the cooking apparatus 1 may further include a cooking food position sensor 540. The cooking food position sensor 540 may obtain position data of a cooking food disposed in the cooking chamber 11. Specifically, the cooking food position sensor 540 may detect positions of cooking foods disposed on the shelf 30 and the lower surface 11b of the cooking chamber 11. The cooking food position sensor 540 may transmit the position data of the cooking foods to the controller 600. The position data of the cooking foods may include three-dimensional position data of the cooking foods.

The cooking food position sensor 540 may include an image sensor such as a camera and/or a non-image sensor such as a radar. In addition, the cooking food position sensor 540 may also include an optical device which emits light to a cooking food. The image sensor such as the camera may capture an image of a cooking food and obtain image data. The non-image sensor such as the radar may transmit a radio wave to a cooking food, receive the radio wave reflected by the cooking food, and obtain position data using the transmitted radio wave and the received radio wave.

The cooking food position sensor 540 may be positioned at an upper side of the inner housing 12. The controller 600 of the cooking apparatus 1 may determine a state in which a cooking food is disposed in the cooking region based on the position data of the cooking food obtained by the cooking food position sensor 540. The controller 600 may determine whether the cooking food is correctly disposed in the cooking region according to a recipe.

In addition, the controller 600 may identify a shape, a position, and a kind of a cooking food disposed in the cooking chamber 11 based on an image data obtained by the cooking food position sensor 540. An identification model for identifying a shape, a position, and a kind of a cooking food may be stored in the memory 620. The controller 600 may input the image data obtained by the cooking food position sensor 540 to the identification model and identify the shape, the position, and the kind of the cooking food based on result data output from the identification model.

The identification model may be generated through machine learning (for example, deep learning) based on previously obtained image data (data for learning). The machine learning is an algorithm technology for classifying and learning features of pieces of input data by itself. For example, the identification model may be generated by learning through one of neural networks such as deep neural networks (DNN), convolutional deep neural networks (CNN), a recurrent neural network (RNN), deep belief networks (DBN), and a deep Q-network.

The identification model may be generated by the server 3 or the processor 610 of the cooking apparatus 1. In addition, when the cooking apparatus 1 is manufactured, an identification model generated by a separate computing device may be stored in the memory 620 of the cooking apparatus 1.

The controller 600 may include the processor 610 and the memory 620. The processor 610 is hardware and may include a logic circuit and an arithmetic circuit. The processor 610 may control the electrically connected components of the cooking apparatus 1 using programs, instructions, and/or data stored in the memory 620 for operating the cooking apparatus 1. The controller 600 may be implemented as a control circuit including a capacitor, a coil, a resistor, and the like. The processor 610 and the memory 620 may be implemented as separate chips or a single chip. In addition, the controller 600 may include a plurality of processors and a plurality of memories.

The memory 620 may store a program, an application, and/or data for operating the cooking apparatus 1 and store data generated by the processor 610. The memory 620 may include a nonvolatile memory such as a read only memory (ROM) and a flash memory for storing data for a long time and a volatile memory such as a static random access memory (S-RAM) and a dynamic random access memory (D-RAM) for temporarily storing data.

The processor 610 may change operation settings of the heaters 200 (210, 220, 230, and 240) disposed above the cooking chamber 11 and the magnetron 300 disposed under the cooking chamber 11.

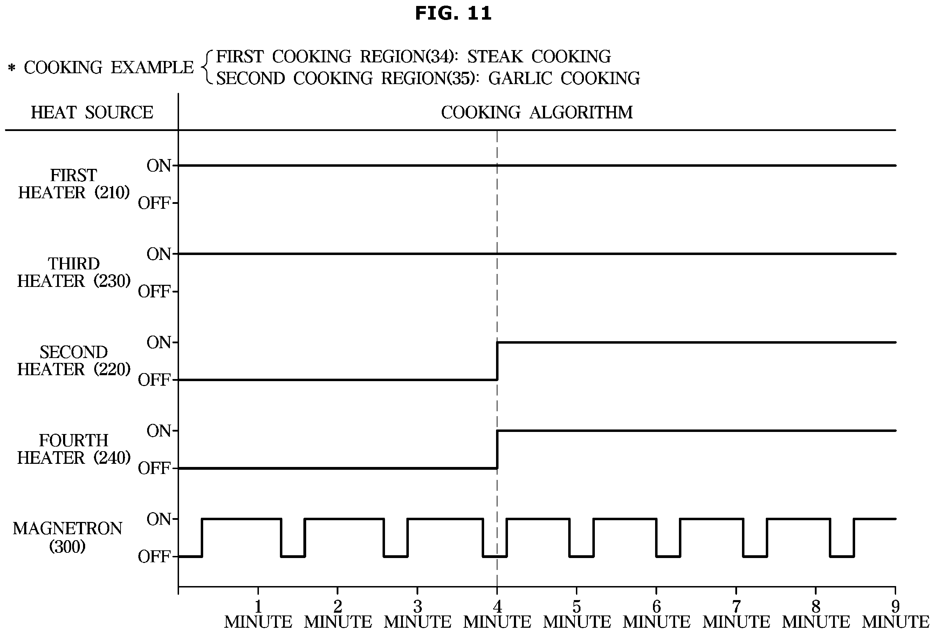

FIG. 11 is a graph showing an example of an operation of the heat source.

First, the controller 600 may determine at least one cooking region in which cooking is to be performed among the plurality of cooking regions in the cooking chamber 11 based on a user's input received from at least one of the mobile device 2 and the inputter 21. The controller 600 may control the display 23 of the cooking apparatus 1 to display a recipe related to the determined cooking region. In addition, the cooking apparatus 1 may transmit the recipe related to the determined cooking region to the mobile device 2. The display 23 of the cooking apparatus 1 and the mobile device 2 may display the recipe related to the cooking region in a list.

A recipe to be applied to each of the cooking regions may be determined based on a user's input. The controller 600 may control at least one among the heaters 200 and the magnetron 300 based on the determined recipe related to the cooking region. A recipe may include information about a kind of a cooking food which may be cooked in each of the cooking regions. In addition, the recipe is a cooking parameter for operating the heat source 100 and may include at least one among a cooking temperature, a cooking time, and an output of the heat source 100.

Referring to FIG. 11, the controller 600 of the cooking apparatus may cook steak in the first cooking region 34 and cook garlic in the second cooking region 35 based on a user's input received from at least one of the mobile device 2 and the inputter 21. As described above, the first heater 210 and the third heater 230 may heat the first cooking region 34, and the second heater 220 and the fourth heater 240 may heat the second cooking region 35. Generally, a larger amount of heat energy is required to cook the steak than the garlic. In order to successfully complete the cooking of the steak and garlic at the same time, different amounts of heat energy need to be supplied to the cooking regions.

In a case in which a total cooking time is set to 9 minutes, the controller 600 of the cooking apparatus 1 may drive the first heater 210 and the third heater 230 with the same output for 9 minutes. In addition, after 4 minutes elapse from cooking start, the controller 600 may drive the second heater 220 and the fourth heater 240 with the same output for 5 minutes. In addition, the controller 600 may drive the magnetron 300 while repeatedly turning the magnetron 300 on and off from the cooking start. The magnetron 300 may be repeatedly turned off for 5 seconds and turned on for 25 seconds.

Through the control of the heat source 100 as described above, cooking of the plurality of cooking foods may be successfully completed in the plurality of cooking regions at the same time. FIG. 11 is a view illustrating only one example of an operation of the heat source for cooking a plurality of cooking foods, and an operation of the heat source may be changed according to various recipes. Hereinafter, while cooking is being performed in some cooking regions, an operation of the cooking apparatus 1 will be specifically described when additional cooking is required in the other cooking region.

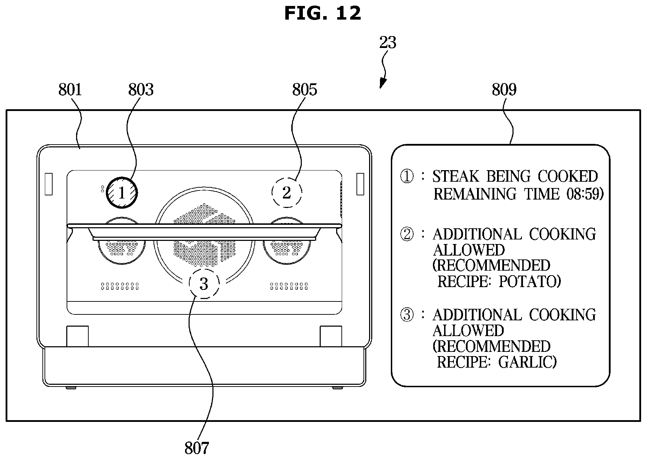

FIG. 12 is a view showing an example of a display screen on which, while cooking is being performed in some cooking regions, other cooking regions in which additional cooking is performable is displayed.

Referring to FIG. 12, the mobile device 2 or the controller 600 of the cooking apparatus 1 may determine the cooking region and a recipe used for cooking based on recipe information selected by the user. While cooking is being performed in some cooking regions among the plurality of cooking regions, the controller 600 may control the display 23 of the cooking apparatus 1 to display images of other cooking regions in which cooking is not currently being performed but in which additional cooking is performable. For example, while cooking is being performed in the first cooking region 34 of the shelf 30 according to a recipe, the controller 600 may control the display 23 to display an image of the second cooking region 35 of the shelf 30 and an image of the third cooking region which is the lower surface 11b of the cooking chamber 11 as other cooking regions in which cooking is not currently being performed but in which additional cooking is performable.

As another example, the controller 600 may detect the cooking region in which a cooking food is detected and detect the cooking region in which a cooking food is not detected using the cooking food position sensor 540 and display an image of the cooking region in which additional cooking is performable on the display 23. The controller 600 may identify a shape, a position, and a kind of a cooking food from data obtained by the cooking food position sensor 540 using the above-described identification model. The controller 600 may determine whether the cooking food is suitably disposed in the cooking region according to a recipe and display an indicator showing an arrangement state of the cooking food through the display 23. The user may recognize an unsuitable arrangement of the cooking food through the indicator.

In FIG. 12, an example is illustrated in which, while the first cooking region 34 of the shelf 30 and a first recipe have been selected and cooking is being performed, images of the second cooking region 35 of the shelf 30 and the third cooking region which is the lower surface 11b of the cooking chamber 11 are displayed on the display 23 as other cooking regions in which additional cooking is performable. The display 23 of the cooking apparatus 1 may display a cooking apparatus image 801 and an information window 809. Operation information of the cooking apparatus 1 may be displayed in text in the information window 809. In addition, the cooking which is being performed in the first cooking region 34 may be displayed with a first icon 803 drawn with a solid line. The second cooking region 35 of the shelf 30 and the third cooking region in which additional cooking is performable may be displayed with a second icon 805 and a third icon 807 which are drawn with dotted lines. The first icon 803, the second icon 805, and the third icon 807 may have a circular shape. The cooking apparatus image 801 is a predetermined standard image or diagram showing the shape of the cooking apparatus 1, the cooking chamber 11 and the cooking regions 34, 35, 11b.

In addition, the controller 600 may control the display 23 to display a recommended recipe with other cooking regions when displaying images of other cooking regions which are available to be added. As illustrated in FIG. 12, "potato" may be displayed as a recommended recipe for the second cooking region 35, and "garlic" may be displayed as a recommended recipe for the third cooking region which is the lower surface 11b of the cooking chamber 11. As described above, while cooking is being performed in some cooking regions, effective use of the plurality of cooking regions may be encouraged by showing other cooking regions in which additional cooking is performable to the user.

In addition, the controller 600 may control the display 23 to display a remaining time to completion of the cooking which is being performed in the first cooking region 34. In FIG. 12, the remaining time to completion of the cooking in the first cooking region 34 is displayed as 08:59.

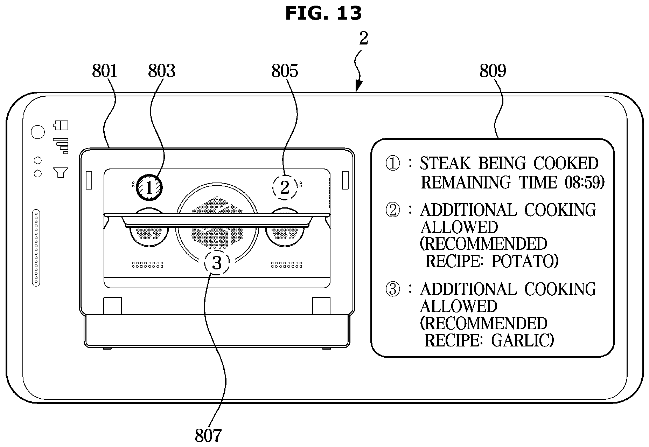

FIG. 13 is a view showing an example of other cooking regions, in which additional cooking is performable, displayed on a mobile device.

Referring to FIG. 13, the mobile device 2 connected to the cooking apparatus 1 may display a GUI for controlling a cooking apparatus 1. That is, operation information of the cooking apparatus 1 may be displayed on a display of the mobile device 2. In a case in which the mobile device 2 displays the operation information of the cooking apparatus 1, the operation information may not be displayed on the display 23 of the cooking apparatus 1.

The controller 600 of the cooking apparatus 1 may control the communicator 400 to transmit the operation information of the cooking apparatus 1 to the mobile device 2. Specifically, the cooking apparatus 1 may transmit information about the cooking region in which cooking is currently being performed to the mobile device 2 through the server 3 or directly transmit the information to the mobile device 2. In addition, the cooking apparatus 1 may transmit information about other cooking regions in which additional cooking is performable to the mobile device 2.

For example, the cooking apparatus 1 may transmit information about the first cooking region in which cooking is currently being performed and information about the second cooking region and information about the third cooking region which are cooking regions in which additional cooking is performable to the mobile device 2. Accordingly, the mobile device 2 may display a screen like the screen displayed on the display 23 of the cooking apparatus 1 illustrated in FIG. 12. That is, the mobile device 2 may display a cooking apparatus image 801 and an information window 809.

In addition, the mobile device 2 may display a first icon 803 drawn with a solid line which denotes that the cooking is being performed in the first cooking region 34, a second icon 805 drawn with a dotted line which denotes the second cooking region 35 in which additional cooking is performable, a third icon 807 drawn with a dotted line which denotes the third cooking region in which additional cooking is performable, and the information window 809. The first icon 803, the second icon 805, and the third icon 807 may be displayed to overlap the cooking apparatus image 801. As described above, the user may more easily check a space in which additional cooking is performable in the cooking apparatus 1 using the mobile device 2.

In addition, when the mobile device 2 displays other cooking regions which are available to be added, the mobile device 2 may display a recommended recipe with other cooking regions. The recommended recipe may be received from the server 3 or from recipe data stored in the memory 620 in advance. For example, "potato" may be displayed as a recommended recipe in the second cooking region 35, and "garlic" may be displayed as a recommended recipe in the third cooking region which is the lower surface 11b of the cooking chamber 11. As described above, while cooking is being performed in some cooking regions, effective use of the plurality of cooking regions may be encouraged by showing other cooking regions in which additional cooking is performable to the user.

FIG. 14 is a view showing an example of a display screen when additional cooking is performed in another cooking region. FIG. 15 is a view showing an example of a screen displayed on the display of the mobile device when the additional cooking is performed in another cooking region.

Some cooking regions may be in a state in which a first recipe is applied. For example, a first recipe which is being applied to the first cooking region 34 may include information in which a kind of a cooking food is steak, a cooking time is 9 minutes, a cooking temperature is 90 °C, the heaters to be operated are the first heater 210 and the third heater 230, and a driving output of the first heater 210 and the third heater 230 is 700 W.

The user may input an additional cooking command related to another cooking region using at least one of the inputter 21 of the cooking apparatus 1 and the mobile device 2. For example, the additional cooking command may be a user's touch input which selects a second circular icon 805 drawn with the dotted line showing the second cooking region 35 in the mobile device 2 of FIG. 13. That is, the user may select the cooking regions in which cooking is to be performed by touching at least one of the first icon 803, the second icon 805, and the third icon 807 displayed on the mobile device 2.

The controller 600 may change the first recipe which is being applied to some cooking regions and determine a second recipe to be applied to another cooking region in a case in which the controller 600 receives an additional cooking command related to another cooking region. Specifically, the controller 600 may change at least one among the cooking time and the cooking temperature included in the first recipe. The change of the first recipe may be affected by the second recipe selected in relation to another cooking region. That is, a change in contents of the first recipe may differ according to contents of the second recipe. At least one among a program, an algorithm, and an application which perform a change or modification of a recipe according to an additional cooking command is stored in the memory 620 of the controller 600.

The second recipe applied to another cooking region may be a recipe included in the additional cooking command. In addition, the second recipe may be a recipe input by the user through the inputter 21 or the mobile device 2 in addition to the additional cooking command.

The controller 600 may control the plurality of heaters 200 based on the changed first recipe and the second recipe. In addition, the controller 600 may control the magnetron 300 based on the changed first recipe and the second recipe.

For example, while cooking is being performed in the first cooking region 34, the controller 600 may receive an additional cooking command related to the second cooking region 35. A second recipe related to the second cooking region 35 may include information in which a kind of a cooking food is potato, a cooking time is 7 minutes 30 seconds, a cooking temperature is 100 °C, the heaters to be operated are the second heater 220 and the fourth heater 240, and a driving output of the second heater 220 and the fourth heater 240 is 700 W.

In this case, the controller 600 may change a first recipe which is being applied to the first cooking region 34. The controller 600 may increase a cooking time of the first recipe by 1 minute 30 seconds. That is, the cooking time of the first recipe may be changed from 9 minutes to 10 minutes 30 seconds. Since the cooking in the first cooking region 34 may be temporarily stopped before additional cooking is started in the second cooking region 35, the cooking time of the first recipe may be increased. The first heater 210 and the third heater 230 which heat the first cooking region 34 are operated for the increased cooking time.

In addition, a cooking temperature of the first recipe may be changed. In a case in which the cooking in the first cooking region 34 is temporarily stopped due to addition of the second cooking region 35, a temperature of a cooking food disposed in the first cooking region 34 may be decreased. Accordingly, the cooking temperature of the first recipe may be temporarily set to be high. In a case in which the cooking temperature of the first recipe is changed, an output of the first heater 210 and an output of the third heater 230 may be changed. As described above, in the case in which, while the cooking is being performed in the first cooking region 34, the cooking in the second cooking region 35 is added, the recipe applied to the first cooking region 34 is changed, and thus cooking does not fail.

In addition, the controller 600 may control the display 23 to display a first remaining time to cooking completion in some cooking regions and a second remaining time to cooking completion in another added cooking region. As illustrated in FIG. 14, the display 23 may display that a remaining time to cooking completion in the first cooking region 34 is 10 minutes 29 seconds and a remaining time to cooking completion in the second cooking region 35 is 10 minutes 29 seconds. That is, the cooking apparatus 1 may display a remaining time to cooking completion in some cooking regions in which the cooking is being performed and a remaining time to cooking completion in another added cooking region. In addition, as illustrated in FIG. 15, the first remaining time and the second remaining time may be displayed on the mobile device 2. Accordingly, the user may easily check the remaining times to cooking completion in the cooking regions.

In addition, in a case in which cooking in some cooking regions and cooking in another added cooking region are required to be completed at the same time, the controller 600 may adjust a cooking start time of another cooking region. The inputter 21 or the mobile device 2 may receive a user's input which selects that cooking which is being performed in some cooking regions and cooking in another added cooking region are individually completed or are completed at the same time.

In FIGS. 14 and 15, a case in which cooking in the first cooking region 34 and cooking in the second cooking region 35 are required to be completed at the same time is illustrated. As the cooking in the first cooking region 34 and the cooking in the second cooking region 35 are required to be completed at the same time, immediately after the cooking in the first cooking region 34 and the cooking in the second cooking region 35 are started, both a first remaining time to cooking completion in the first cooking region 34 and a second remaining time to cooking completion in the second cooking region 35 are displayed as 10 minutes 29 seconds. In other words, although a cooking time of a second recipe applied to the second cooking region 35 is 7 minutes 30 seconds, a cooking start time of the second cooking region 35 may be delayed by 3 minutes.

In a case in which cooking in the first cooking region 34 and cooking in the second cooking region 35 are required to be individually completed, a cooking start time of the second cooking region 35 may not be adjusted. In other words, the cooking in the second cooking region 35 may be performed according to an additional cooking start command related to the second cooking region 35. In this case, immediately after cooking start of the second cooking region 35, a remaining time to cooking completion in the second cooking region 35 may be displayed as 7 minutes 29 seconds. As described above, since the user may select that cooking which is being performed in some cooking regions and cooking in another added cooking region are to be individually completed or are to be completed at the same time, user convenience can be improved.

Meanwhile, in a case in which the controller 600 receives an additional cooking command and an arrangement of a cooking food in another cooking region is delayed, the controller 600 may control the display 23 to display a delay notice. The delay notice may be displayed as at least one of text and an image on the display 23. For example, after an additional cooking command related to the second cooking region 35 is input, an arrangement of a cooking food in the second cooking region 35 may be delayed due to a cause such as a user's mistake. Cooking in the first cooking region 34 may be temporarily stopped due to the additional cooking command related to the second cooking region 35, and when the stopped time is increased, the cooking may be failed. In order to prevent this, in a case in which an arrangement of the cooking food is delayed for a predetermined time after the additional cooking command is input, the controller 600 may control the display 23 to display a delay notice after the predetermined time elapses. Such a delay notice may also be displayed on the mobile device 2.

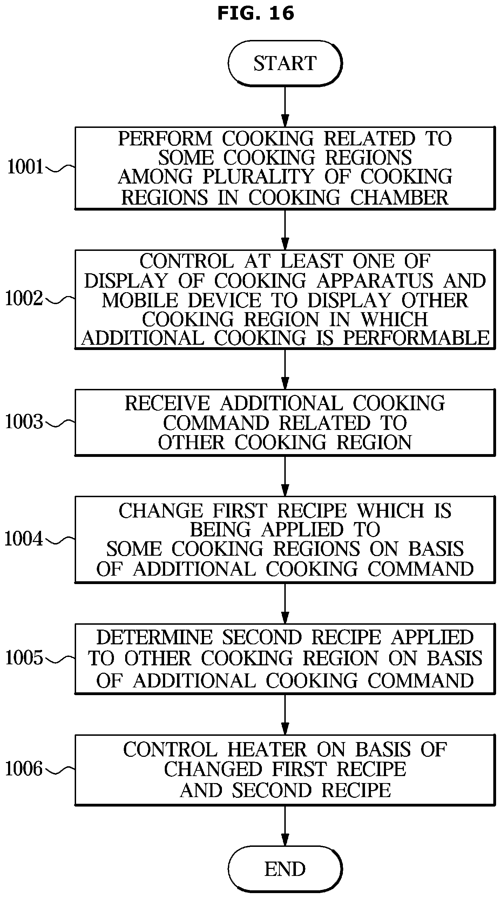

FIG. 16 is a flowchart for describing a method of controlling a cooking apparatus according to one embodiment.

Referring to FIG. 16, the controller 600 of the cooking apparatus 1 according to one embodiment may perform cooking in some cooking regions among the plurality of cooking regions in the cooking chamber 11 (1001). The controller 600 may determine at least one cooking region in which cooking is to be performed among the plurality of cooking regions in the cooking chamber 11 and a recipe to be applied to the cooking region based on a user's input. For example, the first cooking region 34 and a first recipe may be selected by a user's input. Cooking in the first cooking region 34 may be performed by a cooking start command related to the first cooking region 34.

While the cooking is being performed in some cooking regions among the plurality of cooking regions, the controller 600 may control at least one of the display 23 or the mobile device 2 to display other cooking regions in which additional cooking is performable (1002). The controller 600 may control the display 23 or the mobile device 2 to display the second cooking region 35 of the shelf 30 and the third cooking region which is the lower surface 11b of the cooking chamber 11 as other cooking regions in which the additional cooking is performable while the cooking is being performed in the first cooking region 34 of the shelf 30.

Then, the controller 600 may receive an additional cooking command related to another cooking region (1003). The controller 600 may change the first recipe which is being applied to some cooking regions based on the additional cooking command (1004) and determine a second recipe to be applied to another cooking region (1005). For example, while the cooking in the first cooking region 34 is being performed, the controller 600 may receive an additional cooking command related to the second cooking region 35. The controller 600 may change the first recipe which is being applied to the first cooking region 34 and determine a second recipe to be applied to the second cooking region 35 based on the additional cooking command. The second recipe applied to another cooking region may be a recipe included in the additional cooking command. In addition, the second recipe may be a recipe input by the user through the inputter 21 or the mobile device 2 in addition to the additional cooking command.

The controller 600 may control the plurality of heaters 200 based on the changed first recipe and the second recipe (1006). In addition, the controller 600 may control the magnetron 300 based on the changed first recipe and the second recipe.

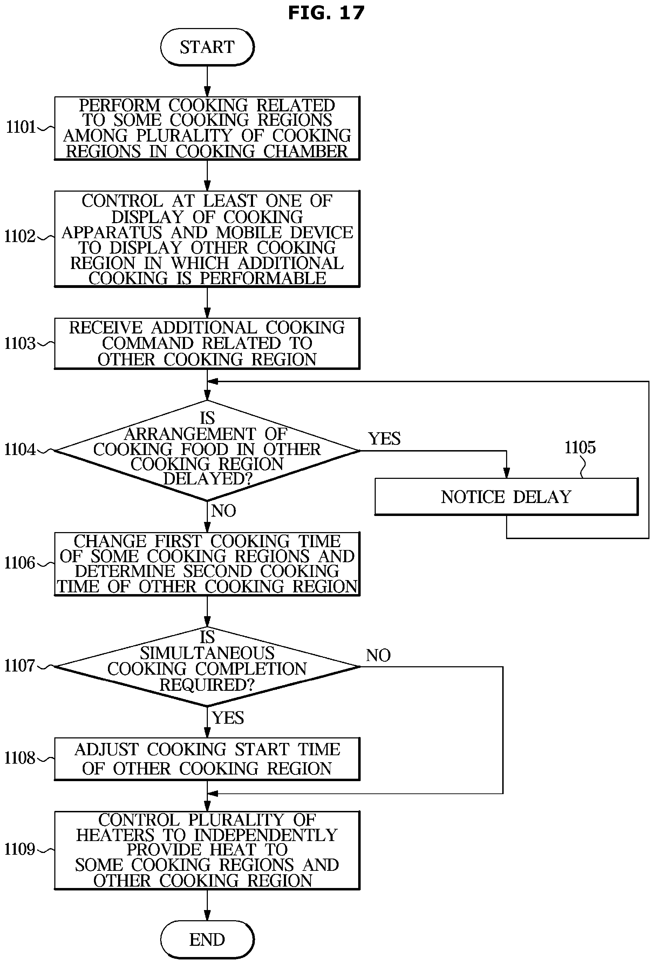

FIG. 17 is a flowchart for describing the method of controlling a cooking apparatus in more detail according to one embodiment.

Referring to FIG. 17, the controller 600 of the cooking apparatus 1 according to one embodiment may perform cooking in some cooking regions among the plurality of cooking regions in the cooking chamber 11 (1101). For example, cooking may be performed in the first cooking region 34. While the cooking is being performed in some cooking regions among the plurality of cooking regions, the controller 600 may control at least one of the display 23 or the mobile device 2 to display other cooking regions in which additional cooking is performable (1102). The controller 600 may receive an additional cooking command related to another cooking region through the inputter 21 or the mobile device 2 (1103). For example, the controller 600 may receive an additional cooking command related to the second cooking region 35.

In addition, the controller 600 may determine whether an arrangement of a cooking food in another cooking region is delayed after receiving the additional cooking command (1104). In a case in which the arrangement of the cooking food in another cooking region is delayed after the controller 600 receives the additional cooking command, the controller 600 may control at least one of the display 23 and the mobile device 2 to display a delay notice (1105). In a case in which the arrangement of the cooking food is delayed for a predetermined time after the controller 600 receives the additional cooking command, the controller 600 may control at least one of the display 23 and the mobile device 2 to display the delay notice after the predetermined time elapses. The delay notice may be displayed as at least one of text and an image.

In a case in which the cooking food is disposed within the predetermined time after the controller 600 receives the additional cooking command, the controller 600 may change a first recipe which is being applied to some cooking regions and determine a second recipe to be applied to another cooking region based on the additional cooking command (1106). For example, the controller 600 may change a first recipe which is being applied to the first cooking region 34 and determine a second recipe to be applied to the second cooking region 35 based on an additional cooking command.

In addition, the controller 600 may determine whether the cooking in some cooking regions and cooking in the added cooking region are required to be completed at the same time (1107). The inputter 21 or the mobile device 2 may receive a user's input which selects that the cooking which is being performed in some cooking regions and the cooking in another added cooking region are individually completed or are completed at the same time. The controller 600 may determine whether the cooking in some cooking regions and the cooking in another cooking region are required to be completed at the same time based on the user's input obtained through the inputter 21 or the mobile device 2.

In a case in which the cooking in some cooking regions and the cooking in another added cooking region are required to be completed at the same time, the controller 600 may adjust a cooking start time of another cooking region (1108). For example, a cooking time of the first recipe applied to the first cooking region 34 and a cooking time of the second recipe applied to the second cooking region 35 may be different. That is, the cooking time of the first recipe may be 10 minutes 30 seconds, and the cooking time of the second recipe may be 7 minutes 30 seconds. Since the cooking in the first cooking region 34 and the cooking in the second cooking region 35 are required to be completed at the same time, a cooking start time of the second cooking region 35 may be delayed by 3 minutes.

In a case in which the cooking in the first cooking region 34 and the cooking in the second cooking region 35 are required to be individually completed, the cooking start time of the second cooking region 35 may not be adjusted. In other words, the cooking in the second cooking region 35 may be performed by an additional cooking start command related to the second cooking region 35. In this case, the cooking in the second cooking region 35 may be performed regardless of the cooking in the first cooking region 34.

The controller 600 may control the plurality of heaters 200 to provide heat to some cooking regions and another cooking region (1109). For example, the controller 600 may control the plurality of heaters 200 based on the changed first recipe in the first cooking region 34 and the second recipe in the added second cooking region 35. In addition, the controller 600 may control the magnetron 300 based on the changed first recipe and the second recipe.

As is apparent from the above description, in the disclosed cooking apparatus and the method of controlling the same, a plurality of cooking foods can be cooked in the plurality of cooking regions provided in the cooking chamber, and in addition, while cooking is being performed in some cooking regions, additional cooking can be performed in another cooking region.

In addition, in the disclosed cooking apparatus and the method of controlling the same, while cooking is being performed in some cooking regions among the plurality of cooking regions, other cooking regions in which additional cooking is performable can be shown to a user. Accordingly, the plurality of cooking regions provided in one cooking chamber can be effectively used.

In addition, in the disclosed cooking apparatus and the method of controlling the same, since the plurality of cooking regions which are spatially and temporarily separable are provided in one cooking chamber, an effect like various cooking apparatuses being integrated can be provided.

Meanwhile, the disclosed embodiments may be implemented in the form of a storage medium which stores computer-executable commands. The commands may be stored in the form of program codes, and when the commands are executed by a processor, program modules may be generated to perform operations of the disclosed embodiments.

A device-readable storage medium may be provided in the form of a non-transitory storage medium. Here, the term "non-transitory storage medium" only denotes a tangible device, does not include a signal (for example, electromagnetic wave), and does not distinguish a case in which data is semi-permanently stored therein from a case in which data is temporarily stored therein. For example, the non-transitory storage medium may include a buffer in which data is temporarily stored.

According to one embodiment, the method according to various embodiments disclosed in the present specification may be provided to be included in a computer program product. The computer program product may be traded between a seller and a buyer as a commodity. The computer program product may be distributed in the form of a device-readable storage medium (for example, compact disc read only memory (CD-ROM)), distributed (for example, downloaded or uploaded) online by an application store (for example, the Play Store^{™}), or directly distributed between two user devices (for example, smartphones). In the case of the online distribution, at least a part of the computer program product (for example, downloadable app) may be at least temporarily stored or generated in a device-readable storage medium such as a memory of a manufacture's server, an application store's server, or a relay server.

The disclosed embodiments have been described with respect to the accompanying drawings as described above. It will be understood by those skilled in the art that the disclosure may be performed in other forms without changing the technological spirit or essential features. Therefore, the above-described embodiments should be considered as only examples and should not be interpreted for purposes of limitation.

## Claims

1. A cooking apparatus comprising:
a cooking chamber including a plurality of cooking regions;
a plurality of heaters, each heater of the plurality of heaters configured to heat at least one cooking region of the plurality of cooking regions;
a display; and
a controller configured to control the plurality of heaters and the display, wherein, while cooking is being performed in at least one cooking region of the plurality of cooking regions and cooking is not being performed in, but additional cooking is performable in, another cooking region of the plurality of cooking regions, the controller controls the display to display an image of the another cooking region.

2. The cooking apparatus of claim 1, wherein in response to the cooking apparatus receiving an additional cooking command for cooking to be performed in the another cooking region, the controller is configured to:
change a first recipe which is being applied to the at least one cooking region,
determine a second recipe to be applied to the another cooking region, and
control the plurality of heaters based on the changed first recipe and the second recipe.

3. The cooking apparatus of claim 2, wherein, to change the first recipe, the controller changes at least one of a cooking time or a cooking temperature included in the first recipe.

4. The cooking apparatus of claim 2, wherein the controller independently controls an output of each heater of the plurality of heaters based on the changed first recipe and the second recipe.

5. The cooking apparatus of claim 4, further comprising:
a magnetron configured to emit high frequency waves into the cooking chamber,
wherein the controller is configured to control an output of the magnetron based on the changed first recipe and the second recipe.

6. The cooking apparatus of claim 2, wherein the controller is configured to control the display to display a first remaining time to cooking completion of the at least one cooking region and a second remaining time to cooking completion of the another cooking region.

7. The cooking apparatus of claim 2, wherein, in response to the cooking being performed in the at least one cooking region and cooking to be performed in the another cooking region being required to be completed at a same time, the controller is configured to adjust a cooking start time of the another cooking region.

8. The cooking apparatus of claim 1, wherein, the controller is configured to control the display to display a recommended recipe for the another cooking region.

9. The cooking apparatus of claim 2, wherein, in response to delay of an arrangement of a cooking food in the another cooking region after the additional cooking command is received, the controller is configured to control the display to display a delay notice.

10. The cooking apparatus of claim 1, further comprising:
an inputter configured to receive an input from a user; and
a communicator configured to communicate with a server and perform connection to a mobile device through the server,
wherein the controller is configured to control:
an operation of the cooking apparatus based on an input from the user received by the inputter and/or an input from the user received by the mobile device, and
the communicator to transmit information related to the another cooking region in which the additional cooking is performable to the mobile device.

11. A method of controlling a cooking apparatus, which includes a cooking chamber including a plurality of cooking regions, a plurality of heaters, each heater of the plurality of heaters configured to heat at least one cooking region of the plurality of cooking regions, and a display, the method comprising:
performing cooking in at least one cooking region of the plurality of cooking regions in the cooking chamber, while cooking is not being performed in, but additional cooking is performable in, another cooking region of the plurality of cooking regions; and
controlling the display to display an image of the another cooking region.

12. The method of claim 11, further comprising:
in response to an additional cooking command for cooking to be performed in the another cooking region being received by the cooking apparatus,
changing a first recipe which is being applied to the at least one cooking region,
determining a second recipe to be applied to the another cooking region, and
controlling the plurality of heaters based on the changed first recipe and the second recipe.

13. The method of claim 12, wherein the changing of the first recipe includes changing at least one of a cooking time or a cooking temperature included in the first recipe.

14. The method of claim 12, wherein the controlling of the plurality of heaters includes independently adjusting an output of each heater of the plurality of heaters based on the changed first recipe and the second recipe.

15. The method of claim 14, wherein:
the cooking apparatus further includes a magnetron configured to emit high frequency waves into the cooking chamber; and
the method further includes controlling an output of the magnetron based on the changed first recipe and the second recipe.
